# EUROPÄISCHE PATENTANMELDUNG

(11) **EP 1 871 127 A1**
(43) Veröffentlichungstag der Anmeldung: **26.12.2007**
(21) Anmeldenummer: 06012745.3
(22) Anmeldetag: 21.06.2006
(51) Int. Cl.: H04Q 7/38, H04L 12/18

(54) **Verfahren und Vorrichtung zum Senden und Empfangen von Daten in einem Kommunikationsnetz**

(71) Anmelder: SIEMENS AKTIENGESELLSCHAFT, 80333 München (DE)
(72) Erfinder: Breuer, Volker, 16727 Bötzow (DE); Färber, Michael, 82515 Wolfratshausen (DE); Lamprecht, Frank, 10439 Berlin (DE)

(57) **Zusammenfassung**

Gegenstand der Erfindung sind ein Verfahren und eine Vorrichtung zum Senden und Empfangen paketorientierter Daten und zugehöriger Steuerdaten in einem Kommunikationsnetz mit mindestens einer Basisstation und mindestens einem mobilen Endgerät, wobei die paketorientierten Daten auf einem ersten Kanal in einem ersten Frequenzband und die zugehörigen Steuerdaten auf zumindest einem dem ersten Kanal zugeordneten zweiten Kanal in einem zweiten Frequenzband übertragen werden, wobei sich das erste Frequenzband von dem zweiten Frequenzband unterscheidet.

## Beschreibung

Die Erfindung betrifft ein Verfahren und Vorrichtungen zum Senden und Empfangen paketorientierter Nutzdaten und zugehöriger Steuerdaten in einem Kommunikationsnetz.

Die dritte Generation der Mobilfunk-Kommunikationsnetze (abgekürzt 3G) stellt eine Vielzahl von Diensten zur Verfügung, unter anderem Dienste zur Übertragung von Sprachdaten (Telefongespräch) und Dienste zur Übertragung von andersartigen Mediadaten (E-Mail, Datendownloads, Instant Messaging, Videotelefonie, Broadcasting). Die im bisherigen 3G-Standard festgelegte Systembandbreite beträgt 5MHz. Die nächste Entwicklungsstufe von 3G, die derzeit vom "3rd Generation Partnership Project*"* (3GPP) unter dem Stichwort " Long Term Evolution*"* (LTE) diskutiert wird, unterstützt unterschiedliche Systembandbreiten. Für das "Universal Mobile Telecommunications System*"* (UMTS) wurde die Funkzugangstechnologie "UMTS Terrestrial Radio Access*"* (UTRA) entwickelt und von 3GPP spezifiziert. UTRA bietet variable Systembandbreiten von bis zu (derzeit) 20 MHz.

Die Bereitstellung effizienter Multimedia-Dienste im Rahmen von Broadcast-Diensten ist eines der Ziele im Rahmen der LTE. Zur Bereitstellung derartiger, in der Regel mit hohen Datenraten in Abwärtsrichtung von einer Basisstation zu mobilen Endgeräten (Downlink, DL) arbeitender Dienste sind leistungsfähige und flexible Verfahren notwendig, die die von einer zentralen Stelle an eine Vielzahl von Endgeräten auszusendenden großen Datenmengen effizient in einem Kommunikationsnetz übertragen können.

Ein solcher Broadcast-Dienst ist der Multimedia Broadcast Multicast Service (kurz: MBMS). Dabei handelt es sich um einen Rundfunk-Dienst, der aufbauend auf den bestehenden GSM-und UMTS-Mobilfunknetzen Broadcast- und Multicast-Übertragungen ermöglicht. Im Gegensatz zu Unicast-Diensten, bei denen Informationen an einen einzelnen Empfänger in einem Kommunikationsnetz gesendet wird, wird im Falle von Broadcast- oder Multicast-.Diensten beispielsweise ein Multimedia-Datenstrom an eine Gruppe von Teilnehmern gesendet. Der Vorteil besteht darin, dass nicht zu jedem einzelnen Gruppen-Teilnehmer eine Punkt-zu-Punkt-Verbindung aufgebaut werden muss, sondern dass jedes zu übertragende Datenpaket innerhalb der Gruppe verteilt werden kann (Punkt-zu-Multipunkt-Verbindung).

Es ist möglich, beispielsweise für GSM- und WCDMA-Systeme MBMS-Dienste in bereits genutzten Frequenzbereichen im Rahmen von Unicast-Diensten zur Verfügung zu stellen, wobei MBMS-Steuerdaten und Nutzdaten im selben Frequenzbereich übertragen werden. Dabei handelt es sich um eine zwingende Implementierung, die sich aus den begrenzten Empfänger-Kapazitäten der Endgeräte ergibt, die hinsichtlich des Empfangs auf einen einzigen Frequenzbereich beschränkt sind: Nur durch Übertragung von Steuer- und Nutzdaten im selben Frequenzbereich ist ein gleichzeitiges Lesen beider Daten möglich.

In Hinblick auf das 3G-System "Universal Mobile Telecommunications System" (UMTS) besteht zudem das Problem, dass eine Allokierung eines Frequenzbereichs gleichzeitig eine Allokierung eines entsprechenden Frequenzbereichs in Gegenrichtung bedeutet: Wird also beispielsweise ein Frequenzband von 5 MHz für eine Downlink-Übertragung eines Dienstes allokiert, bedeutet dies gleichzeitig die Allokierung eines ebenfalls 5 MHz breiten Frequenzbandes in Aufwärtsrichtung (Uplink). Für den Fall eines Broadcast-Dienstes wie dem oben erwähnten MBMS-Dienst bedeutet dies eine ineffiziente Nutzung des Frequenzspektrums, da ein derartiger Dienst große Datenmengen nur in Abwärtsrichtung von einer Mobilstation an eine Gruppe von Endgeräten sendet. Ein Rückkanal (Feedback-Kanal) zur Rückmeldung beispielsweise von Steuerdaten benötigt jedoch prinzipiell nur eine deutlich geringere Bandbreite als der Downlink-Kanal, auf dem der Broadcast-Dienst übertragen wird, da die gegebenenfalls anfallenden Steuerdaten, die die Endgeräte an die Basisstation senden, nur ein vergleichsweise kleines Datenvolumen darstellen.

Broadcast- und Multicast-Übertragungen benötigen aufgrund fehlenden Kanalfeedbacks und somit fehlender Rückmeldungen seitens einen derartigen Dienst empfangender Endgeräte hinsichtlich der jeweiligen Empfangsqualität eine Übertragungssteuerung, die sicherstellt, dass alle Endgeräte, insbesondere auch solche mit sehr schlechten Empfangsbedingungen, ausreichend versorgt sind. Dazu sind eine robuste Kodierung sowie genügend hohe Sendeleistung sicherzustellen, wobei insbesondere die hohe Sendeleistung negative Auswirkungen auf die Empfangsqualität in anderen Zellen hat.

Die Aufgabe der Erfindung besteht darin, ein Verfahren und eine Vorrichtung dahingehend auszugestalten, dass die Bereitstellung von Multimedia-Diensten, insbesondere die gleichzeitige Bereitstellung von Unicast-, Multicast- und Broadcast-Diensten, in einem mobilen Kommunikationsnetz effizient unter Vermeidung der oben dargestellten Probleme ermöglicht wird.

Diese Aufgabe wird durch die Merkmale des Patentanspruchs 1 hinsichtlich des Verfahrens und durch die Merkmale der Patentansprüche 11, 12 und 14 hinsichtlich der Vorrichtungen gelöst. Weiterbildungen der Erfindung sind in den abhängigen Ansprüchen angegeben.

Gegenstand der Erfindung ist ein Verfahren zum Senden und Empfangen paketorientierter Daten und zugehöriger Steuerdaten in einem Kommunikationsnetz mit mindestens einer Basisstation und mindestens einem mobilen Endgerät, wobei die paketorientierten Daten auf einem ersten Kanal in einem ersten Frequenzband und die zugehörigen Steuerdaten auf zumindest einem dem ersten Kanal zugeordneten zweiten Kanal in einem zweiten Frequenzband übertragen werden, wobei sich das erste Frequenzband von dem zweiten Frequenzband unterscheidet.

Weiterhin betrifft die Erfindung Vorrichtungen sowie ein Kommunikationsnetz zur Ausführung des dargestellten Verfahrens.

Die Erfindung bringt unter anderem den Vorteil mit sich, dass Broadcast- und Multicast-Dienste, insbesondere datenintensive Dienste wie MBMS, effizient einer Vielzahl von Endgeräten zur Verfügung gestellt werden können, da die Aufteilung in einen Datenkanal und einen Steuerkanal beispielsweise eine Optimierung hinsichtlich der benötigten Bandbreite beider Kanäle angesichts der unterschiedlichen zu übertragenden Datenvolumen ermöglicht. Weiterhin ist es für ein Endgerät vorteilhaft, dass es durch die erfindungsgemäße Übertragung von Steuerdaten und Nutzdaten eines MBMS-Dienstes in separaten Frequenzbändern abwechselnd auf beiden Frequenzbereichen empfangen kann und somit kein paralleler Empfang von Steuer- und Nutzdaten und eine damit verbundene aufwändige Trennung der Daten notwendig ist. Zudem benötigt ein Endgerät für den Empfang eines erfindungsgemäß übertragenen MBMS-Dienstes nur einen Empfänger.

Entgegen dem derzeitigen symmetrischen Charakter des Kommunikationsverkehrs stellt ein Multimedia-Broadcast-Dienst hohe Anforderungen an den Downlink-Kanal. Die Verwendung eines Frequenzpaares, bestehend aus fest verknüpften, hinsichtlich der Bandbreite gleichartigen Uplink- und Downlink-Kanälen, zur Übertragung von Multimedia-Broadcast-Diensten würde wie oben dargestellt zu einer ineffizienten Nutzung der Uplink-Ressourcen führen. Dies wird durch die Erfindung effizient vermieden, da eine separate Allokierung von breitbandigem Nutzdaten-Kanal und schmalbandigem Steuerkanal erfolgt.

Im Weiteren werden folgende weitere Abkürzungen verwendet:
MBMS: Multimedia Broadcast Multicast Service; Breitband-Dienst zur Übertragung von Multimedia-Daten.
MTCH: Multicast Traffic Channel; Datenkanal zur Übertragung beispielsweise eines MBMS
MCCH: Multicast Control Channel; dem Datenkanal zugeordneter Steuerkanal zur Übertragung von Steuerdaten bezüglich eines Broadcast-Dienstes
MICH: MBMS Notification Indicator Channel; dem Datenkanal zugeordneter Steuerkanal zur Übertragung von Paging-Daten
UL: Uplink; Aufwärtsrichtung, von einer mobilen Endgerät zu einer Basisstation
DL: Downlink; Abwärtsrichtung, von einer Basisstation zu einem mobilen Endgerät

Ein Ausführungsbeispiel der Erfindung ist in der Zeichnung dargestellt und wird im Folgenden näher beschrieben.

Es zeigt:

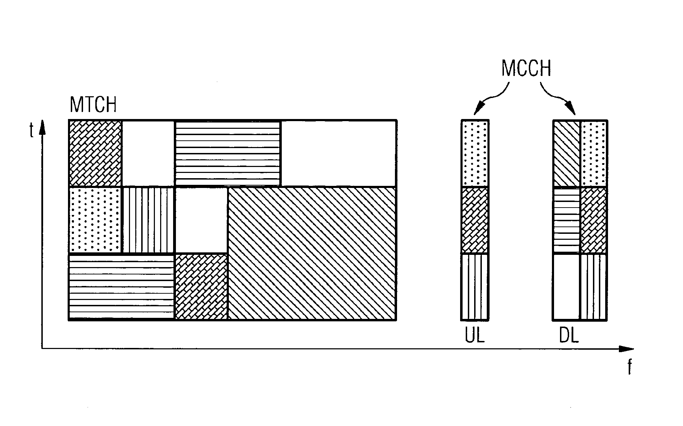

Figur 1: Beispielbelegung für einen separaten Datenkanal für einen MBMS-Dienst sowie einen zugeordneten Steuerkanal

Figur 1 zeigt ein Ausführungsbeispiel der vorliegenden Erfindung. Dargestellt sind zwei getrennte physikalische Kanäle, denen jeweils ein bestimmter Frequenzbereich zugeordnet ist. Der jeweilige tatsächliche Frequenzbereich ist dabei mittels der horizontalen Achse f angedeutet. Der zeitliche Ablauf der Übertragung ist durch die vertikale Achse t angedeutet. Dargestellt sind ein erster breitbandiger Datenkanal MTCH, auf dem ein MBMS-Dienst übertragen wird, sowie ein schmalbandiger Steuerkanal MCCH. Der Steuerkanal MCCH setzt sich aus zwei physikalischen Teilkanälen UL, DL zusammen, wobei auf dem ersten Teilkanal UL Daten in Uplink-Richtung und auf dem zweiten Teilkanal DL Daten in Downlink-Richtung übertragen werden. Der Steuerkanal MCCH dient zum einen zum Übertragen von Steuerdaten bezüglich des auf dem Datenkanal MTCH übertragenen MBMS-Dienstes; des Weiteren sind auf dem Steuerkanal MCCH an alle den MBMS-Dienst empfangenden Endgeräte gerichteten Paging-Daten übertragbar. Erfindungsgemäß werden somit Nutzdaten und Steuerdaten auf separaten physikalischen Kanälen in jeweils unterschiedlichen Frequenzbändern empfangen, wobei sich die Bandbreite der Kanäle nach dem zu übertragenden Datenvolumen richtet.

Wie in Figur 1 dargestellt, können in dem Datenkanal MTCH mehrere MBMS-Dienste sowohl gleichzeitig (durch Unterteilung des Datenkanals MTCH in Frequenzabschnitte) als auch zeitlich gestaffelt (zeitverschachtelt) übertragen werden. Weiterhin ist es möglich, zu einem bestimmten MBMS-Dienst gehörende Datenpakete mit einem bestimmten Zeitabstand wiederholt zu übertragen.

In der Figur 1 sind die zu den jeweiligen MBMS-Diensten gehörenden, auf dem Steuerkanal MCCH übertragenen Steuerdaten in übereinstimmender Schraffur dargestellt.

Die in Figur 1 dargestellte Ausführungsform verdeutlicht die sich im Rahmen der LTE ergebenden neuen Möglichkeiten für den Systembetrieb: Aufgrund der im Vergleich zu GSM- oder UMTS-Systemen wesentlich breitbandigeren Auslegung ist es möglich, Steuerdaten und Nutzdaten hinsichtlich der Frequenzband-Belegung getrennt zu betrachten, ohne dass beispielsweise eine Entsprechung der Bandbreiten zwischen Steuerkanal und Datenkanal vorliegen muss. Wie in Figur 1 dargestellt, wird erfindungsgemäß wird ein breitbandiger Dienst einem separaten Downlink-Kanal zugewiesen, wobei eine Verknüpfung zu einem zugehörigen schmalbandigen Kontrollkanal, bestehend beispielsweise aus je einem Uplink- und Downlink-Unterkanal besteht. Auf diese Weise ist der breitbandige Dienst mittels des Steuerkanals effizient kontrollierbar.

Die in Figur 1 dargestellte Belegung des Datenkanals MTCH stellt ein Ausführungsbeispiel dar, bei dem sechs (in der Figur 1 durch unterschiedliche Schraffuren gekennzeichnete) unterschiedliche MBMS-Dienste zeitlich und Frequenz-gestaffelt übertragen werden. Jeder MBMS-Dienst wird über die Zeit wiederholt, dargestellt durch die Zeitachse t. Die Figur 1 dargestellte Ausprägung des Steuerkanals MTCH ermöglicht neben der wiederholten Übertragung desselben Datenpakets eine zeitverschachtelte (time multiplexed) Übertragung der zu den MBMS-Diensten gehörenden Datenpakete.

Die zu den im Datenkanal MTCH übertragenen MBMS-Diensten gehörenden Steuerdaten sind wie in Figur 1 dargestellt ebenfalls zeitverschachtelt übertragbar. Im dargestellten Beispiel sind im Uplink-Teilkanal UL des Steuerkanals MCCH lediglich Ressourcen für drei der im Datenkanal MTCH übertragenen MBMS-Dienste reserviert. Der Grund liegt darin, dass nicht jeder MBMS-Dienst zwingend ein Feedback, also eine Rückübertragung beispielsweise von Steuerdaten von einem Endgerät zur Basisstation erfordert. Beispielsweise ist bei der Übertragung eines Video-Streaming-Dienstes als eine Form eines MBMS-Dienstes kein Feedback nötig. Im Gegensatz dazu sind andere MBMS-Dienste denkbar, die mittels Feedback Rückmeldungen hinsichtlich der Empfangsqualität oder auch Teilnehmerwünsche wie zum Beispiel Umschaltung auf ein anderes TV-Programm im Fall von TV-Broadcasting ermöglichen. Eine ähnliche Anwendung für Feedback stellt eine Dienst-Vergebührung dar, wenn beispielsweise einige Inhalte eines TV-Broadcasting-Dienstes kostenpflichtig sind und andere nicht, wobei ein Teilnehmer unter Nutzung eines bestimmten MBMS-Dienstes zwischen mehreren TV-Programmen wählen kann.

Im in Figur 1 dargestellten Beispiel sind die im Downlink-Teilkanal DL des Steuerkanals MCCH zu übertragenden Datenpakete ebenfalls Zeit- und Frequenz-verschachtelt. Für den Fall, dass der Datenkanal MTCH flexibel allokierbar ist, kann der Steuerkanal MCCH Positions-Informationen bezüglich der zu den Steuerdaten gehörenden Datenpakete im Frequenzspektrum des Datenkanals MTCH sowie zur zeitlichen Abfolge der Datenpakete im Datenkanal MTCH beinhalten.

Eine weitere vorteilhafte Ausprägung der Erfindung sieht die Verknüpfung mehrerer Steuerkanäle MCCH mit einem einzelnen Datenkanal zur Übertragung eines MBMS-Dienstes vor, wobei die mehreren Steuerkanäle beispielsweise in verschiedenen Frequenzbereichen angesiedelt sein können. Dadurch lässt sich in Abhängigkeit von unterschiedlichen Bedingungen an unterschiedlichen Standorten von den MBMS-Dienst nutzenden Endgeräten ein geeigneter Steuerkanal für den Datenkanal MCCH wählen, so dass die Empfangsqualität situations- und ortsabhängig optimierbar ist.

Eine weitere vorteilhafte Ausführungsform ermöglicht es, Datenübertragungsphasen und Feedback-Übertragungen zeitlich verschachtelt (time-interleaved) vorzunehmen. Dies bietet insbesondere deshalb Vorteile, da die Möglichkeit des gleichzeitigen Empfangs einer Mehrzahl von Frequenzbändern nicht für alle Endgeräte vorausgesetzt werden kann.

In einer weiteren Ausprägung der Erfindung wird die Übertragung von Nutzdaten im Datenkanal MTCH sowie die Übertragung von Steuerdaten im Steuerkanal MCCH zeitlich in folgender Weise koordiniert: Steuerdaten werden auf dem Steuerkanal MCCH in Zeitabschnitten übertragen, in denen keine korrespondierenden MBMS-Daten auf dem Datenkanal MTCH zu übertragen sind. Alternativ geschieht die Übertragung von Steuerdaten auf dem Steuerkanal MCCH in Zeitabschnitten, in denen eine wiederholte Übertragung schon zuvor übertragener MBMS-Daten auf dem Datenkanal MTCH erfolgt. Diese Zeitabschnitte können für das Übertragen von Steuerdaten auf dem Steuerkanal MCCH genutzt werden, beispielsweise für Feedback über den Uplink-Teilkanal UL oder vor Dienstbeginn zu zwecks Aushandlung von Dienst-Übertragungsmodalitäten.

Ein weiteres Ausführungsbeispiel sieht vor, den Datenkanal zur Übertragung von Paging-Daten MICH derart auszugestalten, dass an ein bestimmtes Endgerät gerichtete Paging-Daten nur in solchen Zeitabschnitten übertragen werden, während derer das betreffende Endgerät auf den Empfang des Steuerkanals MCCH eingestellt ist.

Ein weiteres Ausführungsbeispiel sieht vor, dass für den Fall, dass ein zusätzlicher dedizierter Kanal aufgebaut werden soll, ein Ressourcen-Planer (englisch Scheduler) mitteilt, dass das betreffende Endgerät zu dem betreffenden Zeitpunkt Daten eines MBMS-Dienstes auf dem Datenkanal MTCH empfängt und somit während bestimmter Zeitabschnitte ausschließlich für den Empfang von Daten auf dem Datenkanal MTCH eingestellt ist. Der Scheduler überträgt die dedizierten Daten nur während solcher Zeitabschnitte, während derer das Endgerät keine MBMS-Daten empfängt. Diese Vorgehensweise stellt sicher, dass dedizierte Endgeräte-spezifische Daten auf dem Steuerkanal MCCH parallel zu den auf dem Datenkanal MTCH übertragenen MBMS-Daten empfangen werden können. Parallel bedeutet in diesem Zusammenhang eine parallele Übertragung aus Sicht des Teilnehmers. Die Übertragung erfolgt dabei wie oben erwähnt in zeitverschachtelter Weise.

In einer weiteren Ausprägung der Erfindung stellt das Kommunikationsnetz ein UMTS-Mobilfunksystem dar. Das erfindungsgemäße Verfahren ist unter anderem im FDD-Betrieb (Frequency Division Duplex) und im TDD-Betrieb (Time Division Duplex) eines UMTS-Mobilfunksystems einsetzbar.

## Patentansprüche

1. Verfahren zum Senden und Empfangen paketorientierter Daten und zugehöriger Steuerdaten in einem Kommunikationsnetz mit mindestens einer Basisstation und mindestens einem mobilen Endgerät, wobei die paketorientierten Daten auf einem ersten Kanal (MTCH) in einem ersten Frequenzband und die zugehörigen Steuerdaten auf zumindest einem dem ersten Kanal (MTCH) zugeordneten zweiten Kanal (MCCH) in einem zweiten Frequenzband übertragen werden, wobei sich das erste Frequenzband von dem zweiten Frequenzband unterscheidet.

2. Verfahren nach Anspruch 1,
**dadurch gekennzeichnet, dass**
der erste Kanal (MTCH) ausschließlich zum Übertragen von Daten in Abwärts-Richtung (DL) von der mindestens einen Basisstation zu dem mindestens einen mobilen Endgerät verwendet wird.

3. Verfahren nach einem der vorherigen Ansprüche,
**dadurch gekennzeichnet, dass**
der zweite Kanal (MCCH) zum Übertragen von Steuerdaten in Abwärtsrichtung (DL) von der Basisstation zu dem mobilen Endgerät und/oder in Aufwärtsrichtung (UL) von dem mobilen Endgerät zu der Basisstation verwendet wird.

4. Verfahren nach Anspruch 3,
**dadurch gekennzeichnet, dass**
das mobile Endgerät auf dem zweiten Kanal (MCCH) in Aufwärtsrichtung (UL) Rückmeldungen bezüglich der Übertragung der paketorientierten Daten an die Basisstation sendet.

5. Verfahren nach einem der vorherigen Ansprüche,
**dadurch gekennzeichnet, dass**
auf dem zweiten Kanal dediziert an das mobile Endgerät gerichtete Daten in Abwärtsrichtung (DL) übertragen werden.

6. Verfahren nach einem der vorherigen Ansprüche,
**dadurch gekennzeichnet, dass**
auf dem ersten Kanal (MTCH) Daten eines Multimedia-Breitband-Dienstes, insbesondere eines Multimedia Broadcast Multicast Service, übertragen werden.

7. Verfahren nach einem der vorherigen Ansprüche,
**dadurch gekennzeichnet, dass**
auf dem zweiten Kanal (MCCH) Paging-Daten übertragen werden.

8. Verfahren nach einem der vorherigen Ansprüche,
**dadurch gekennzeichnet, dass**
auf dem zweiten Kanal (MCCH) Lokalisierungs-Daten bezüglich einer Anordnung im Frequenzbereich und einer zeitlichen Anordnung der auf dem ersten Kanal (MTCH) übertragenen Daten übertragen werden.

9. Verfahren nach einem der vorherigen Ansprüche,
**dadurch gekennzeichnet, dass**
ein zusätzlicher dedizierter Kanal zwischen der Basisstation und dem mobilen Endgerät aufgebaut wird, wobei Daten auf dem dedizierten Kanal nur während solcher Zeitabschnitte übertragen werden, während derer keine Übertragung auf dem ersten Kanal (MTCH) vorgenommen wird.

10. Verfahren nach einem der vorherigen Ansprüche,
**dadurch gekennzeichnet, dass**
die Übertragung der Daten zeitverschachtelt erfolgt.

11. Kommunikationsnetz mit mindestens einer Basisstation und mindestens einem mobilen Endgerät zum Senden und Empfangen paketorientierter Daten und zugehöriger Steuerdaten, und mit einem ersten Kanal (MTCH) in einem ersten Frequenzband zum Senden und Empfangen der paketorientierten Daten und einem dem ersten Kanal (MTCH) zugeordneten zweiten Kanal (MCCH) in einem zweiten Frequenzband zum Senden und Empfangen der zugehörigen Steuerdaten, wobei sich das erste Frequenzband von dem zweiten Frequenzband unterscheidet.

12. Endgerät eines Kommunikationsnetzes
a. mit Mitteln zum Empfangen von auf einem ersten Kanal (MTCH) in einem ersten Frequenzband übertragenen paketorientierten Daten und von auf einem dem ersten Kanal (MTCH) zugeordneten zweiten Kanal (MCCH) in einem zweiten Frequenzband übertragenen zugehörigen Steuerdaten,
b. wobei sich das erste Frequenzband von dem zweiten Frequenzband unterscheidet, und
c. mit Mitteln zur Verarbeitung der empfangenen Daten.

13. Endgerät nach Anspruch 12 mit Mitteln zum Senden von Rückmeldungen bezüglich der empfangenen Daten an eine Basisstation.

14. Basisstation eines Kommunikationsnetzes
a. mit Mitteln zum Senden von paketorientierten Daten auf einem ersten Kanal (MTCH) in einem ersten Frequenzband und von zugehörigen Steuerdaten auf einem dem ersten Kanal (MTCH) zugeordneten zweiten Kanal (MCCH) in einem zweiten Frequenzband,
b. wobei sich das erste Frequenzband von dem zweiten Frequenzband unterscheidet.

15. Basisstation nach Anspruch 14
mit Mitteln zum Empfangen von von einem Endgerät gesendeten Rückmeldungen bezüglich der von dem Endgerät empfangenen Daten an die Basisstation.

16. Basisstation nach Anspruch 14 und 15
mit Mitteln zur Verarbeitung der Rückmeldungen des Endgerätes.
